# EUROPEAN PATENT SPECIFICATION

(11) **EP 3 299 960 B1**
(45) Date of publication and mention of the grant of the patent: **31.07.2019**
(21) Application number: 16813519.2
(22) Date of filing: 02.03.2016
(51) Int. Cl.: G06F 9/455, G06F 9/445

(54) **VIRTUAL MACHINE DEPLOYMENT METHOD, DEVICE AND NETWORK FUNCTION VIRTUALIZATION ORCHESTRATOR (NFVO)**
EINSATZVERFAHREN FÜR EINE VIRTUELLE MASCHINE, VORRICHTUNG UND NETZWERKFUNKTIONVIRTUALISIERUNGSORCHESTRATOR (NFVO)
PROCÉDÉ DE DÉPLOIEMENT DE MACHINE VIRTUELLE, DISPOSITIF ET ORCHESTRATEUR DE VIRTUALISATION DE FONCTION RÉSEAU (NFVO)

(30) Priority: 26.06.2015 CN 201510366772
(43) Date of publication of application: 28.03.2018
(73) Proprietor: ZTE Corporation, Shenzhen, Guangdong 518057 (CN)
(72) Inventor: JU, Manchang, Shenzhen Guangdong 518057 (CN); LAN, Fengfeng, Shenzhen Guangdong 518057 (CN); QI, Lei, Shenzhen Guangdong 518057 (CN)
(74) Representative: AWA Sweden AB
(86) International application number: PCT/CN2016/075371
(87) International publication number: WO 2016/206403

(56) References cited:
- CN-A- 102 646 062
- CN-A- 103 823 718
- CN-A- 103 970 555
- CN-A- 104 239 116
- US-A1- 2014 189 689
- JOSE ORLANDO MELENDEZ ET AL: "A Framework for Automatic Resource Provisioning for Private Clouds", CLUSTER, CLOUD AND GRID COMPUTING (CCGRID), 2013 13TH IEEE/ACM INTERNATIONAL SYMPOSIUM ON, IEEE, 13 May 2013 (2013-05-13), pages 610-617, XP032431254, DOI: 10.1109/CCGRID.2013.91 ISBN: 978-1-4673-6465-2

## Description

### Technical Field

The present invention relates to the field of communication, in particular to a virtual machine deployment method and device and a Network Function Virtualization Orchestrator, NFVO.

### Background

3rd Generation Partnership Project (3GPP) System Architecture Evolution (SAE) is a mainstream technology for current mobile network evolution and development, and is widely adopted by domestic and overseas operators and communication device enterprises, and a core network thereof is also called as an Evolved Packet Core (EPC). The EPC includes a Packet Data Network-GateWay (PGW), a Serving-GateWay (SGW) and a Mobility Management Entity (MME), etc. In addition to the EPC, the core network further includes soft switch and Internet Protocol (IP) Multimedia Subsystems (IMS), etc.

Cloud platforms refer to common cloud operating systems such as OpenStack, virtualized platforms (VmWare, vSphere) and cloud platform services (CouldStack). OpenStack is a cloud computation solution of Infrastructure as a Service (IaaS), and due to its full openness is supported by numerous international large companies and is also concerned by domestic industries.

The thought of Network Functions Virtualization (NFV) is to use a virtualization technology to separate service applications from underlying software architecture, such that services operate on virtual machines, differences in underlying hardware, operating systems, memories and network layers are shielded by virtual machines, and a relatively unified and simple operating environment is formed. Operators can decrease device investment and reduce device costs and operation and maintenance costs.

Common virtualized systems include virtual systems (VmWare), Kernel-based Virtual Machines (KVMs), Xen, etc. VmWare is a commercial virtualization tool, is chargeable, has stable functions, supports common underlying operating systems and is not open. KVM is a light-weight virtualization tool under Linux and is open. Xen is a virtualization tool realized by operating system strongly correlated modes. Through virtualization systems, deployment of various core network elements as virtual machines on cloud platforms can be realized. Similarly, soft switch and IMS devices may also be virtualized.

Through scaled-out or scaled-in deployment of network element virtual machines, service processing capacities of mobile core network elements are enhanced or reduced, and the energy consumption is reduced, and the effect of energy saving and emission reduction is realized.

A method for deploying virtual core networks in the related art approximately includes the following steps. Data (one or more of Packet Data Protocol (PDP), service traffic, user number, call quantity and the like) which represent current core network element loads are acquired. When it is determined that virtual machines need to be scaled out at current according to the acquired data which represent current core network element loads, the number of newly added virtual machines is calculated according to the acquired data which represent current corer network element loads, and a Network Functions Virtualization Orchestrator (NFVO) is notified to scale out virtual machines and about the calculated number of newly added virtual machines through a Virtualized Network Function Manager (VNFM). When it is determined that virtual machines need to be scaled in at current according to the acquired data which represent current core network element loads, The number of reduced virtual machines is calculated according to the acquired data which represent current corer network element loads, and the NFVO is notified to scale in virtual machines and about the calculated number of reduced virtual machines through the VNFM.

In methods for deploying virtual core networks in the related art, since certain processing time is needed for scaling out or ejecting virtual machines, time spent in user migration, data synchronization and the like after virtual machines are ejected is longer, and original virtual machines cannot process services in time, a situation that users cannot access is further possibly caused and consequently user experience is reduced.

Aiming at the problems of slow service processing speed and poor user experience due to long scaling-out of virtual machines in the related art, no effective solution has already been provided so far.

The document JOSE ORLANDO MELENDEZ et al.: "A Framework for Automatic Resource Provisioning for Private Clouds" discloses a middleware framework that avoids the step of a priori capacity analysis and allows such private cloud owners to provision resources automatically such that a specified grade of service is maintained. The framework performs dynamic resource provisioning that also leads to a reduction of operational cost.

### Summary

A virtual machine deployment method and device and a Network Function Virtualization Orchestrator (NFVO) according to independent claims are provided. Further improvements and embodiments are provided in the dependent claims.

Also provided is a virtual machine deployment method, including: determining that start time of reserved deployment for virtual machines in a set deployment policy is reached, and then notifying a virtual machine management module for a virtual core network that the reserved deployment for virtual machines takes effect, herein, under a situation that the reserved deployment for virtual machines takes effect, the virtual machine management module for the virtual core network elastically scales out or scales in a number of virtual machines to be within a range of a number of reserved virtual machines; determining a current elastically scaled-out or scaled-in number of virtual machines according to the deployment policy; and deploying the virtual machines according to the determined elastically scaled-out or scaled-in number of virtual machines.

In an embodiment of the present invention, the deployment policy further includes at least one of: a minimum number of deployed virtual machines, a maximum number of deployed virtual machines, end time of the reserved deployment for virtual machines and a duration in which the reserved deployment takes effect. Herein, the duration in which the reserved deployment takes effect includes an interval between the start time of the reserved deployment for virtual machines and the end time of the reserved deployment for virtual machines, and the range of the number of reserved virtual machines is determined according to the minimum number of deployed virtual machines and the maximum number of deployed virtual machines.

In an embodiment of the present invention, the step of determining the current elastically scaled-out or scaled-in number of virtual machines according to the deployment policy includes: determining a current number of the virtual machines; when determining that the current number of virtual machines is smaller than the minimum number of deployed virtual machines, determining the current elastically scaled-out number of virtual machines according to a difference value between the current number of virtual machines and the minimum number of deployed virtual machines; and/or when determining that the current number of virtual machines is greater than the maximum number of deployed virtual machines, determining the current elastically scaled-in number of virtual machines according to a difference value between the current number of virtual machines and the maximum number of deployed virtual machines.

In an embodiment of the present invention, the step of notifying the virtual machine management module for the virtual core network that the reserved deployment for virtual machines takes effect includes: sending a message indicating that deployment takes effect to the virtual machine management module for the virtual core network through a Virtualized Network Function Manager (VNFM), herein the message indicating that deployment takes effect is used for notifying the virtual machine management module for the virtual core network that the reserved deployment for virtual machines takes effect.

In an embodiment of the present invention, the message indicating that deployment takes effect includes the minimum number of deployed virtual machines and the maximum number of deployed virtual machines, and after the step of deploying virtual machines according to the determined elastically scaled-out or scaled-in number of virtual machines, the method further includes: when the end time of the reserved deployment for virtual machines is reached, notifying the virtual machine management module for the virtual core network that the reserved deployment for virtual machines loses efficacy. Herein, under a situation that the reserved deployment for virtual machines loses efficacy, the virtual machine management module for the virtual core network clears restrictions to the number of deployed virtual machines.

In an embodiment of the present invention, the step of notifying the virtual machine management module for the virtual core network that the reserved deployment for virtual machines loses efficacy includes: sending a message indicating that deployment loses efficacy to the virtual machine management module for the virtual core network through the VNFM. Herein the message indicating that deployment loses efficacy is used for notifying the virtual machine management module for the virtual core network that the reserved deployment for virtual machines loses efficacy.

In an embodiment of the present invention, the message indicating that deployment takes effect includes the minimum number of deployed virtual machines, the maximum number of deployed virtual machines and the duration in which the reserved deployment takes effect. Herein, when the duration in which the reserved deployment takes effect is reached, the virtual machine management module for the virtual core network clears restrictions to the number of deployed virtual machines.

Also provided is a virtual machine deployment device, including a first notification module, a determination module and a deployment module. The first notification module is configured to determine that start time of reserved deployment for virtual machines in a set deployment policy is reached, and then notify a virtual machine management module for a virtual core network that the reserved deployment for virtual machines takes effect. Herein, under a situation that the reserved deployment for virtual machines takes effect, the virtual machine management module for the virtual core network elastically scales out or scales in a number of virtual machines to be within a range of a number of reserved virtual machines. The determination module is configured to determine a current elastically scaled-out or scaled-in number of virtual machines according to the deployment policy. And the deployment module is configured to deploy the virtual machines according to the determined elastically scaled-out or scaled-in number of virtual machines.

In an embodiment of the present invention, the deployment policy further includes at least one of: a minimum number of deployed virtual machines, a maximum number of deployed virtual machines, end time of the reserved deployment for virtual machines and a duration in which the reserved deployment takes effect. Herein, the duration in which the reserved deployment takes effect includes an interval between the start time of the reserved deployment for virtual machines and the end time of the reserved deployment for virtual machines, and the range of the number of reserved virtual machines is determined according to the minimum number of deployed virtual machines and the maximum number of deployed virtual machines.

In an embodiment of the present invention, the determination module includes a first determination unit and a second determination unit. The first determination unit is configured to determine a current number of virtual machines. And the second determination unit is configured to, when determining that the current number of virtual machines is smaller than the minimum number of deployed virtual machines, determine the current elastically scaled-out number of virtual machines according to a difference value between the current number of virtual machines and the minimum number of deployed virtual machines; and/or when determining that the current number of virtual machines is greater than the maximum number of deployed virtual machines, determine the current elastically scaled-in number of virtual machines according to a difference value between the current number of virtual machines and the maximum number of deployed virtual machines.

In an embodiment of the present invention, the first notification module includes: a first sending unit configured to send a message indicating that deployment takes effect to the virtual machine management module for the virtual core network through a Virtualized Network Function Manager (VNFM). Herein, the message indicating that deployment takes effect is used for notifying the virtual machine management module for the virtual core network that the reserved deployment for virtual machines takes effect.

In an embodiment of the present invention, the message indicating that deployment takes effect includes the minimum number of deployed virtual machines and the maximum number of deployed virtual machines, and the device further includes a second notification module. The second notification module is configured to, when the end time of the reserved deployment for virtual machines is reached, notify the virtual machine management module for the virtual core network that the reserved deployment for virtual machines loses efficacy. Herein, under a situation that the reserved deployment for virtual machines loses efficacy, the virtual machine management module for the virtual core network clears restrictions to the number of deployed virtual machines.

In an embodiment of the present invention, the second notification module includes a second sending unit. The second sending unit is configured to send a message indicating that deployment loses efficacy to the virtual machine management module for thee virtual core network through the VNFM. Herein, the message indicating that deployment loses efficacy is used for notifying the virtual machine management module for the virtual core network that the reserved deployment for virtual machines loses efficacy.

In an embodiment of the present invention, the message indicating that deployment takes effect sent by the first sending unit includes the minimum number of deployed virtual machines, the maximum number of deployed virtual machines and the duration in which the reserved deployment takes effect. Herein, when the duration in which the reserved deployment takes effect is reached, the virtual machine management module for the virtual core network clears restrictions to the number of deployed virtual machines.

Also provided is a Network Functions Virtualization Orchestrator (NFVO), including any device described above.

In the embodiments of the present invention, when it is determined that start time of reserved deployment for virtual machines in a set deployment policy is reached, a virtual machine management module for a virtual core network is notified that the reserved deployment for virtual machines takes effect, herein, under a situation that the reserved deployment for virtual machines takes effect, the virtual machine management module for the virtual core network elastically scales out or scales in the number of virtual machines to be within a range of the number of reserved virtual machines; a current elastically scaled-out or scaled-in number of virtual machines is determined according to the deployment policy; and virtual machines are deployed according to the determined elastically scaled-out or scaled-in number of virtual machines. Therefore, through the embodiments of the present invention the problems of slow service processing speed and poor user experience caused by long scaling-out of virtual machines in the related art are solved, and thus the effects of reducing the scaling-out of virtual machines, improving the service processing speed and improving the user experience are achieved.

### Brief Description of Drawings

The drawings described here are used for providing further understanding about the present invention and constitutes a part of the present application. The exemplary embodiments of the present invention and the description thereof are used for explaining the present invention instead of improperly limiting the present invention. In the drawings:
FIG. 1 illustrates a flowchart of a virtual machine deployment method according to an embodiment of the present invention.
FIG. 2 illustrates a structural diagram of a virtual machine deployment device according to an embodiment of the present invention.
FIG. 3 illustrates a structural diagram of a determination module 24 in a virtual machine deployment device according to an embodiment of the present invention.
FIG. 4 illustrates a structural diagram of a first notification module 22 in a virtual machine deployment device according to an embodiment of the present invention.
FIG. 5 illustrates an alternative structural diagram of a virtual machine deployment device according to an embodiment of the present invention.
FIG. 6 illustrates a structural diagram of a second notification module 52 in a virtual machine deployment device according to an embodiment of the present invention.
FIG. 7 illustrates a structural diagram of an NFVO according to an embodiment of the present invention.
FIG. 8 illustrates a flowchart of a method for reserved deployment of a virtual core network according to an embodiment of the present invention.
FIG. 9 illustrates another flowchart of a method for reserved deployment of a virtual core network according to an embodiment of the present invention.
FIG. 10 illustrates a schematic diagram of structural components of a device for deploying a virtual core network according to an embodiment of the present invention.
FIG. 11 illustrates another schematic diagram of structural components of a device for deploying a virtual core network according to an embodiment of the present invention.

### Detailed Description

The present invention will be described below in detail with reference to the drawings in combination with the embodiments. It needs to be stated that the embodiments in the present application and the features in the embodiments may be mutually combined under a situation of no conflict.

It needs to be stated that terms such as "first" and "second" in the description, the claims and the drawings of the present invention are used for distinguishing similar objects instead of necessarily describing specific orders or sequences.

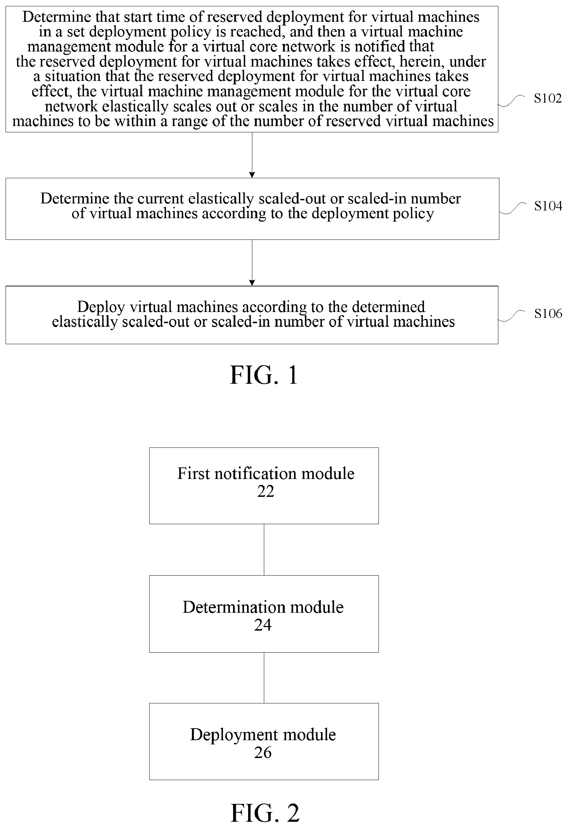

An embodiment provides a virtual machine deployment method. FIG. 1 illustrates a flowchart of a virtual machine deployment method according to an embodiment of the present invention. As illustrated in FIG. 1, the method includes the following steps S102-S106.

In step S102, when determining that start time of reserved deployment for virtual machines in a set deployment policy is reached, a virtual machine management module for a virtual core network is notified that the reserved deployment for virtual machines takes effect. Herein, under a situation that the reserved deployment for virtual machines takes effect, the virtual machine management module for the virtual core network elastically scales out or scales in the number of virtual machines to be within a range of the number of reserved virtual machines.

In step S104, a current elastically scaled-out or scaled-in number of virtual machines is determined according to the deployment policy.

In step S106, virtual machines are deployed according to the determined elastically scaled-out or scaled-in number of virtual machines.

Through the above-mentioned steps, by deploying virtual machines according to the deployment policy, service traffic impacts which possibly occur are effectively avoided, sufficient time is reserved for completing elastic scaling-out or scaling-in of virtual machines, therefore the problems of slow service processing speed and poor user experience caused by long scaling-out of virtual machines in the related art are solved, and thus the effects of reducing the scaling-out of virtual machines, improving the service processing speed and improving the user experience are achieved.

From the above-mentioned embodiment, it can be seen that the deployment policy includes the start time of reserved deployment for virtual machines. In one alternative embodiment, the deployment policy further includes at least one of: a minimum number of deployed virtual machines, a maximum number of deployed virtual machines, end time of the reserved deployment for virtual machines and a duration in which the reserved deployment takes effect. The duration in which the reserved deployment takes effect includes an interval between the start time of the reserved deployment for virtual machines and the end time of the reserved deployment for virtual machines, and the range of the number of reserved virtual machines is determined according to the minimum number of deployed virtual machines and the maximum number of deployed virtual machines.

In one alternative embodiment, the step of determining the current elastically scaled-out or scaled-in number of virtual machines according to the deployment policy includes: determining a current number of virtual machines; when determining that the current number of virtual machines is smaller than the minimum number of deployed virtual machines, determining the current elastically scaled-out number of virtual machines according to a difference value between the current number of virtual machines and the minimum number of deployed virtual machines; and/or when determining that the current number of virtual machines is greater than the maximum number of deployed virtual machines, determining the current elastically scaled-in number of virtual machines according to a difference value between the current number of virtual machines and the maximum number of deployed virtual machines. In other words, when it is determined that the current number of virtual machines is smaller than the minimum number of deployed virtual machines, the current number of virtual machines is elastically scaled out to the minimum number of deployed virtual machines; and/or when it is determined that the current number of virtual machines is greater than the maximum number of deployed virtual machines, the current number of virtual machines is elastically scaled in to the maximum number of deployed virtual machines.

In one alternative embodiment, the step of notifying the virtual machine management module for the virtual core network that the reserved deployment for virtual machines takes effect includes: sending a message indicating that deployment takes effect to the virtual machine management module for the virtual core network through a Virtualized Network Function Manager (VNFM). Herein, the message indicating that deployment takes effect is used for notifying the virtual machine management module for the virtual core network that the reserved deployment for virtual machines takes effect. Notifying the virtual machine management module for the virtual core network through the VNFM is just one notification mode. Of course, other modes may also be adopted for notifying the virtual machine management module for the virtual core network.

In one alternative embodiment, the message indicating that deployment takes effect includes the minimum number of deployed virtual machines and the maximum number of deployed virtual machines, and after the step of deploying virtual machines according to the determined elastically scaled-out or scaled-in number of virtual machines, the method further includes: when the end time of the reserved deployment for virtual machines is reached, notifying the virtual machine management module for the virtual core network that the reserved deployment for virtual machines loses efficacy. Herein, under a situation that the reserved deployment for virtual machines loses efficacy, the virtual machine management module for the virtual core network clears restrictions to the number of deployed virtual machines.

In one alternative embodiment, the step of notifying the virtual machine management module for the virtual core network that the reserved deployment for virtual machines loses efficacy includes: sending a message indicating that deployment loses efficacy to the virtual machine management module for the virtual core network through the VNFM. Herein, the message indicating that deployment loses efficacy is used for notifying the virtual machine management module for the virtual core network that the reserved deployment for virtual machines loses efficacy.

In an exemplary embodiment, the message indicating that deployment takes effect includes the minimum number of deployed virtual machines, the maximum number of deployed virtual machines and the end time of the reserved deployment of virtual machines. Herein, when the end time of the reserved deployment for virtual machines is reached, the virtual machine management module for the virtual core network clears restrictions to the number of deployed virtual machines. From the above-mentioned embodiment, it can be seen that there are at least two modes for making the reserved deployment for virtual machines lose efficacy. One mode is that the reserved deployment for virtual machines is controlled to lose efficacy after the virtual machine management module for the virtual core network receives the message indicating that deployment loses efficacy, i.e., the operation of making the deployment lose efficacy needs to be triggered by other modules. The other mode is that the message indicating that deployment loses efficacy carries the duration in which the reserved deployment takes effect, and the virtual machine management module for the virtual core network starts a timer after receiving the message indicating that deployment takes effect, and the time set by the timer is equal to the duration in which the reserved deployment takes effect, and after the timer times out, the virtual machine management module for the virtual core network controls the reserved deployment for virtual machines to lose efficacy.

Through the description of the above-mentioned implementation modes, one skilled in the art can clearly understand that the methods according to the above-mentioned embodiments may be implemented by means of software plus a necessary general-purpose hardware platform. Of course, the methods may also be implemented by means of hardware. However, under many situations, the former one is a more preferred implementation mode. Based on such understanding, the technical solution of the present invention substantively or the part which makes a contribution to the existing art may be embodied in the form of a software product. And the computer software product is stored in a storage medium (such as an ROM/RAM, a magnetic disk or a compact disk), and includes a plurality of instructions used for enabling one terminal device (which may be a mobile phone, a computer, a server or a network device) to execute the method according to each embodiment of the present invention.

An embodiment further provides a virtual machine deployment device. The device is used for implementing the above-mentioned embodiments and alternative implementation modes, and thus the content which has already been described is not repetitively described here. As used below, the term "module" may be a combination of software and/or hardware with predetermined functions. Although the device described in the following embodiments is preferably implemented by means of software, the implementation by means of hardware or the combination of software and hardware is also possible and may be conceived.

FIG. 2 illustrates a structural diagram of a virtual machine deployment device according to an embodiment of the present invention. As illustrated in FIG. 2, the device includes a first notification module 22, a determination module 24 and a deployment module 26. The device will be described below.

The first notification module 22 is configured to, when determining that start time of reserved deployment for virtual machines in a set deployment policy is reached, notify a virtual machine management module for a virtual core network that the reserved deployment for virtual machines takes effect. Herein, under a situation that the reserved deployment for virtual machines takes effect, the virtual machine management module for the virtual core network elastically scales out or scales in the number of virtual machines to be within a range of the number of reserved virtual machines. The determination module 24 is connected to the first notification module 22 and is configured to determine the current elastically scaled-out or scaled-in number of virtual machines according to the deployment policy. The deployment module 26 is connected to the determination module 24 and is configured to deploy virtual machines according to the determined elastically scaled-out or scaled-in number of virtual machines.

In an embodiment of the present invention, the deployment policy further includes at least one of: a minimum number of deployed virtual machines, a maximum number of deployed virtual machines, end time of the reserved deployment for virtual machines and a duration in which the reserved deployment takes effect. Herein, the duration in which the reserved deployment takes effect includes an interval between the start time of the reserved deployment for virtual machines and the end time of the reserved deployment for virtual machines, and the range of the number of reserved virtual machines is determined according to the minimum number of deployed virtual machines and the maximum number of deployed virtual machines.

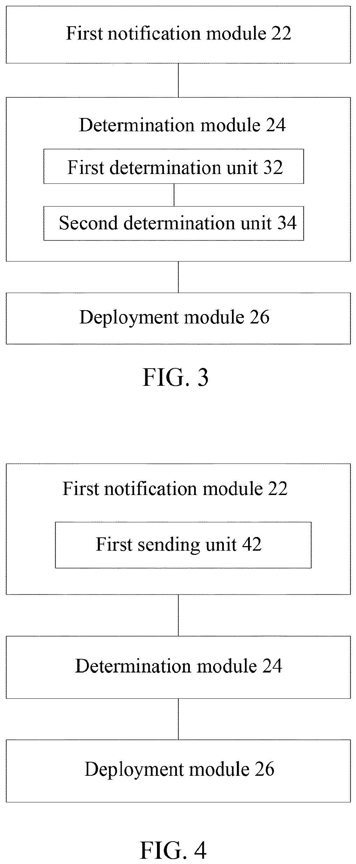

FIG. 3 illustrates a structural diagram of a determination module 24 in a virtual machine deployment device according to an embodiment of the present invention. As illustrated in FIG. 3, the determination module 24 includes a first determination unit 32 and a second determination unit 34. The determination module 24 will be described below.

The first determination unit 32 is configured to determine the current number of virtual machines. The second determination unit 34 is connected to the first determination unit 32 and is configured to, when determining that the current number of virtual machines is smaller than the minimum number of deployed virtual machines, determine the current elastically scaled-out number of virtual machines according to a difference value between the current number of virtual machines and the minimum number of deployed virtual machines; and/or when determining that the current number of virtual machines is greater than the maximum number of deployed virtual machines, determine the current elastically scaled-in number of virtual machines according to a difference value between the current number of virtual machines and the maximum number of deployed virtual machines.

FIG. 4 illustrates a structural diagram of a first notification module 22 in a virtual machine deployment device according to an embodiment of the present invention. As illustrated in FIG. 4, the first notification module 22 includes a first sending unit 42. The first notification module 22 will be described below.

The first sending unit 42 is configured to send a message indicating that deployment takes effect to the virtual machine management module for the virtual core network through a Virtualized Network Function Manager (VNFM). Herein, the message indicating that deployment takes effect is used for notifying the virtual machine management module for the virtual core network that the reserved deployment for virtual machines takes effect.

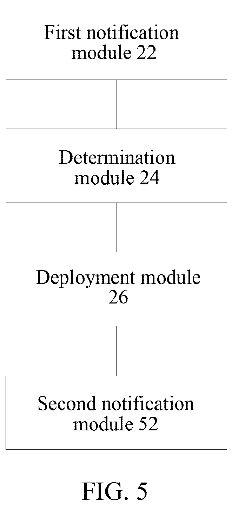

In an embodiment of the present invention, the message indicating that deployment takes effect includes the minimum number of deployed virtual machines and the maximum number of deployed virtual machines. FIG. 5 illustrates an alternative structural diagram of a virtual machine deployment device according to an embodiment of the present invention. As illustrated in FIG. 5, in addition to all modules illustrated in FIG. 2, the device further includes a second notification module 52. The device will be described below.

The second notification module 52 is connected to the deployment module 26 and is configured to, when the end time of the reserved deployment for virtual machines is reached, notify the virtual machine management module for the virtual core network that the reserved deployment for virtual machines loses efficacy. Herein, under a situation that the reserved deployment for virtual machines loses efficacy, the virtual machine management module for the virtual core network clears restrictions to the number of deployed virtual machines.

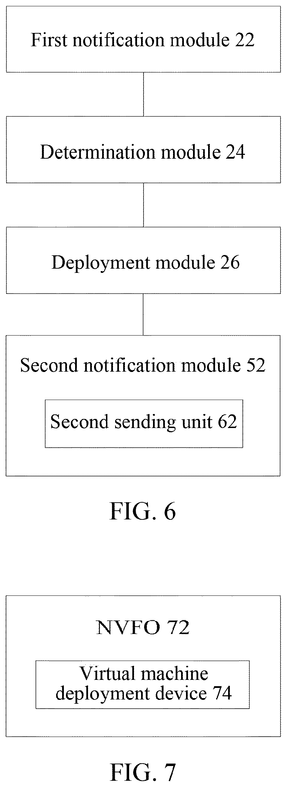

FIG. 6 illustrates a structural diagram of a second notification module 52 in a virtual machine deployment device according to an embodiment of the present invention. As illustrated in FIG. 6, the second notification module 52 includes a second sending unit 62. The second notification module 52 will be described below.

The second sending unit 62 is configured to send a message indicating that deployment loses efficacy to the virtual machine management module for the virtual core network through the VNFM. Herein, the message indicating that deployment loses efficacy is used for notifying the virtual machine management module for the virtual core network that the reserved deployment for virtual machines loses efficacy.

In an embodiment of the present invention, the message indicating that deployment takes effect sent by the first sending unit 42 includes the minimum number of deployed virtual machines, the maximum number of deployed virtual machines and the end time of the reserved deployment for virtual machines. Herein, when the end time of the reserved deployment for virtual machines is reached, the virtual machine management module for the virtual core network clears restrictions to the number of deployed virtual machines.

FIG. 7 illustrates a structural diagram of an NFVO according to an embodiment of the present invention. As illustrated in FIG. 7, the NFVO 72 includes any one of the above-mentioned virtual machine deployment devices 74. Herein, the virtual machine management module for the virtual core network may be connected with the NFVO through the VNFM and is used for receiving the message sent by the NFVO and executing corresponding operations according to the message sent by the NFVO. Herein, the message at least includes the message indicating that deployment takes effect and the message indicating that deployment loses efficacy. The virtual machine management module for the virtual core network may be applied to any core network element which can be virtualized, e.g., may be applied to a Mobile Management Entity (MME).

In an embodiment of the present invention, a first method for reserved deployment for virtual machines is further provided, including the following steps.

A deployment policy for a virtual core network is configured in a Network Function Virtualization Orchestrator (NFVO) reservation module, and includes the number of reserved virtual machines, start time of reserved deployment (the same as the above start time of reserved deployment for virtual machines), and end time of reserved deployment (the same as the above end time of reserved deployment for virtual machines). The number of reserved virtual machines includes a minimum number of deployed virtual machines and a maximum number of deployed virtual machines. A duration in which reserved deployment takes effect is an interval between the end time of reserved deployment and the start time of reserved deployment.

When the start time of reserved deployment for virtual machines is reached, a message (the same as the above message indicating that deployment takes effect) is sent through a Virtualized Network Function Manager (VNFM) to notify the virtual machine management module for the virtual core network that the reserved deployment mechanism of virtual machines takes effect. The content of the message indicating that the reserved deployment takes effect includes the number of reserved virtual machines. After the virtual core network virtual management module receives the message, the automatically elastically scaled-out or scaled-in number of virtual machines must be within the range of the number of reserved virtual machines.

Simultaneously, the NFVO calculates the current number of virtual machines which need to be elastically scaled out or scaled in according to the reserved deployment policy for the virtual core network. If the current number of virtual machines is smaller than the minimum number of deployed virtual machines by reservation, the number of virtual machines needs to be immediately elastically scaled out to the minimum number of deployed virtual machines by reservation. If the current number of virtual machines is greater than the maximum number of deployed virtual machines by reservation, the number of virtual machines needs to be immediately elastically scaled in. The number of actually running virtual machines does not exceed the maximum number of deployed virtual machines by reservation.

When the end time of reserved deployment for virtual machines is reached, a message is sent through the VNFM to notify the virtual machine management module for the virtual core network that the reserved deployment for virtual machines loses efficacy. After the virtual machine management module for the virtual core network receives the message, restrictions to the number of deployed virtual machines are cleared.

In an embodiment of the present invention, a second method for reserved deployment for virtual machines is further provided, including the following steps.

A deployment policy for a virtual core network is configured in a Network Functions Virtualization Orchestrator (NFVO) reservation module, and includes a number of reserved virtual machines, start time of reserved deployment and a duration in which the reserved deployment takes effect. The number of reserved virtual machines includes a minimum number of deployed virtual machines and a maximum number of deployed virtual machines. The duration in which the reserved deployment takes effect is an interval between the end time of reserved deployment and the start time of reserved deployment.

When the start time of reserved deployment is reached, a message is sent through a Virtualized Network Function Manager (VNFM) to notify the virtual machine management module for the virtual core network that the reserved deployment mechanism of virtual machines takes effect. The message indicating that the reserved deployment takes effect includes the number of reserved virtual machines and the duration in which the reserved deployment takes effect. After the virtual core network virtual management module receives the message, the automatically elastically scaled-out or scaled-in number of virtual machines must be within the range of the number of reserved virtual machines. Simultaneously, a timer indicating that the reserved deployment takes effect is configured, and the duration of the timer is the duration in which the reserved deployment takes effect.

Simultaneously, the NFVO calculates a current number of virtual machines which need to be elastically scaled out or scaled in according to the virtual core network reserved deployment policy. If the current number of virtual machines is smaller than the minimum number of deployed virtual machines by reservation, the number of virtual machines needs to be immediately elastically scaled out to the minimum number of deployed virtual machines by reservation. If the current number of virtual machines is greater than the maximum number of deployed virtual machines by reservation, the number of virtual machines needs to be immediately elastically scaled in. The number of actually running virtual machines does not exceed the maximum number of deployed virtual machines by reservation.

When the end time of reserved deployment is reached, i.e., the timer indicating that the reserved deployment takes effect times out, and after the virtual machine management module for the virtual core network receives a message about that the timer indicating that the reserved deployment takes effect times out, restrictions to the number of deployed virtual machines are cleared.

In an embodiment of the present invention, a first device for reserved deployment of virtual core network is further provided, at least including the following modules.

A reserved deployment configuration module is configured to configure a virtual core network reserved deployment policy, including a number of reserved virtual machines, start time of reserved deployment and end time of reserved deployment. The number of reserved virtual machines includes a minimum number of deployed virtual machines and a maximum number of deployed virtual machines, and a duration in which reserved deployment takes effect is an interval between the end time of reserved deployment and the start time of reserved deployment.

A notification module (the same as the above first notification module 22) is configured to, when the start time of reserved deployment is reached, send a message through a Virtualized Network Function Manager (VNFM) to notify the virtual machine management module for the virtual core network that the reserved deployment mechanism of virtual machines takes effect. A notification message is constructed. The content of the message indicating that the reserved deployment takes effect includes the minimum number of deployed virtual machines by reservation and the maximum number of deployed virtual machines by reservation.

The notification module (the same as the above second notification module 52) is further configured to, when the end time of reserved deployment is reached, send a message through the VNFM to notify the virtual machine management module for the virtual core network that the reserved deployment mechanism loses efficacy. A notification message is constructed. The content of the message indicating that the reserved deployment for virtual machines loses efficacy may be empty or an invalid value.

A virtual machine management module (the same as the above virtual machine management module for a virtual core network), which is a network element virtualization control module, is configured to process an event that the reserved deployment for virtual machines takes effect. When it is automatically calculated that the number of needed virtual machines is smaller than the minimum number of deployed virtual machines by reservation, virtual machines cannot be elastically scaled in. When it is automatically calculated that the number of needed virtual machines is greater than the maximum number of deployed virtual machines by reservation, virtual machines cannot be elastically scaled out.

The virtual machine management module is further configured to process an event that the reserved deployment for virtual machines loses efficacy. The number of automatically deployed virtual machines is not restricted by the number of deployed virtual machines by reservation any longer.

A reserved deployment execution module (the same as the above determination module 24) is configured to calculate a current number of virtual machines which need to be elastically scaled out or scaled in by a Network Functions Virtualization Orchestrator (NFVO) according to the virtual core network reserved deployment policy. If the current number of virtual machines is smaller than the minimum number of deployed virtual machines by reservation, the number of virtual machines needs to be immediately elastically scaled out to the minimum number of deployed virtual machines by reservation. If the current number of virtual machines is greater than the maximum number of deployed virtual machines by reservation, the number of virtual machines needs to be immediately elastically scaled in. The number of actually running virtual machines does not exceed the maximum number of deployed virtual machines by reservation.

In an exemplary embodiment, the reserved deployment configuration module is further configured to:
configure a deployment policy for a virtual core network, including a number of reserved virtual machines, start time of reserved deployment and a duration in which the reserved deployment takes effect. The number of reserved virtual machines includes a minimum number of deployed virtual machines and a maximum number of deployed virtual machines. The duration in which the reserved deployment takes effect is an interval between the end time of reserved deployment and the start time of reserved deployment.

In an exemplary embodiment, the notification module is further configured to:
when the start time of reserved deployment is reached, send a message through a Virtualized Network Function Manager (VNFM) to notify the virtual machine management module for the virtual core network. The content of the message includes the number of reserved deployment for virtual machines and the duration in which the reserved deployment for virtual machines takes effect.

In an exemplary embodiment, the virtual machine management module is further configured to:
after the reserved deployment notification message is received, automatically elastically scale out or scale in the number of virtual machines, such that the number of virtual machines after elastically scaling out or scaling in must be within the range of the number of reserved virtual machines, and configure a time indicating that the reserved deployment takes effect. Herein, a duration of the timer is the duration in which the reserved deployment for virtual machines takes effect.

The virtual machine management module is further configured to:
when the timer indicating that the reserved deployment for virtual machines times out, after the virtual machine management module for the virtual core network receives a message about that the timer indicating that the reserved deployment for virtual machines times out, clear restrictions to the range of the number of automatically deployed virtual machines.

As compared with the related art, in embodiments of the present invention, the deployment policy for the virtual core network including the number of reserved virtual machines, the start time of reserved deployment and the end time of reserved deployment is configured in the reservation module of the NFVO. When the start time of reserved deployment is reached, the message is sent through the VNFM to notify the virtual machine management module for the virtual core network that the reserved deployment mechanism takes effect. Virtual machines are elastically scaled out or scaled in according to the reserved deployment policy for the virtual core network in the NFVO. When the end time of reserved deployment is reached, the message is sent through the VNFM to notify the virtual machine management module for the virtual core network that the reserved deployment mechanism loses efficacy. By adopting the solution in embodiments of the present invention and deploying core network virtual machines according to the reserved deployment policy, service traffic impacts which possibly occur are effectively avoided, sufficient time is reserved for completing scaling-out or elastic scaling-out of virtual machines and thus the user experience is improved. In addition, by configuring the maximum number of deployed virtual machines, more selections are provided to users, and the peak impacts are cut down, and the resources are reasonably allocated and the stable working of the system is guaranteed.

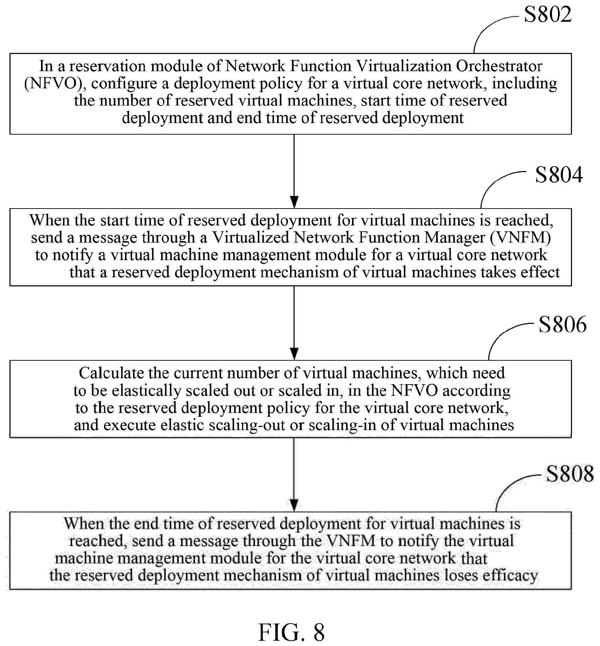

FIG. 8 illustrates a flowchart of a method for reserved deployment of a virtual core network according to an embodiment of the present invention. Referring to FIG. 8, the method for the reserved deployment of the virtual core network provided by the embodiment of the present invention includes the following steps S802-S808.

In step S802, a deployment policy for a virtual core network is configured in a Network Functions Virtualization Orchestrator (NFVO) reservation module.

In this step, the deployment policy for the virtual core network includes a number of reserved virtual machines, start time of reserved deployment and end time of reserved deployment.

In this step, the number of reserved virtual machines includes a minimum number of deployed virtual machines and a maximum number of deployed virtual machines. The minimum number of deployed virtual machines may be 0 or a positive integer, and the maximum number of deployed virtual machines is an empirical value for guaranteeing normal operation of the device.

In this step, a duration in which reserved deployment takes effect is an interval between the end time of reserved deployment and the start time of reserved deployment. The start time of reserved deployment and the end time of reserved deployment adopt absolute time and may be configured in the form of xxxx (year).xx (month).xx (day) xx (hour):xx (minute):xx (second). For example, the start time of reserved deployment is 2015.12.31 20:00:00 and the end time of reserved deployment is 2016.01.01 02:00:00.

In this step, the start time of reserved deployment may be configured according to experiences. For example, a sum of time needed for the NFVO to complete scaling-out or elastic scaling-out of virtual machines and time needed for user migration and data synchronization caused by scaling-out or elastic scaling-out of virtual machines is considered. The start time of preset reserved deployment is half an hour or 15 minutes ahead of automatic deployment.

In step S804, when the start time of reserved deployment for virtual machines is reached, a message is sent through a Virtualized Network Function Manager (VNFM) to notify a virtual machine management module for a virtual core network that a reserved deployment mechanism of virtual machines takes effect.

In this step, the content of the message indicating that the reserved deployment takes effect includes the number of reserved virtual machines. After the virtual machine management module for the virtual core network receives the message, an automatically elastically scaled-out or scaled-in number of virtual machines must be within the range of the number of reserved virtual machines. If it is calculated according to an automatic deployment function of virtual machines that the needed number of virtual machines is smaller than the minimum number of deployed virtual machines by reservation, an elastic scaling-in process of virtual machines cannot be triggered. Similarly, if it is calculated according to the automatic deployment function of virtual machines that the needed number of virtual machines is greater than the maximum number of deployed virtual machines by reservation, an elastic scaling-out process of virtual machines cannot be triggered, either.

In step S806, the NFVO may calculate the current number of virtual machines which need to be elastically scaled out or scaled in according to the virtual core network reserved deployment policy, since the NFVO has information about the current number of actually running virtual machines. If the current number of virtual machines is smaller than the minimum number of deployed virtual machines by reservation, the number of virtual machines needs to be immediately elastically scaled out to the minimum number of deployed virtual machines by reservation. If the current number of virtual machines is greater than the maximum number of deployed virtual machines by reservation, the number of virtual machines needs to be immediately elastically scaled in, and the number of actually running virtual machines does not exceed the maximum number of deployed virtual machines by reservation.

In step S808, when the end time of reserved deployment for virtual machines is reached, a message is sent through the VNFM to notify the virtual machine management module for the virtual core network that the reserved deployment mechanism of virtual machines loses efficacy.

In this step, after the virtual machine management module for the virtual core network receives the message, restrictions to the number of deployed virtual machines are cleared and the system operates according to an automatic deployment mechanism of virtual machines.

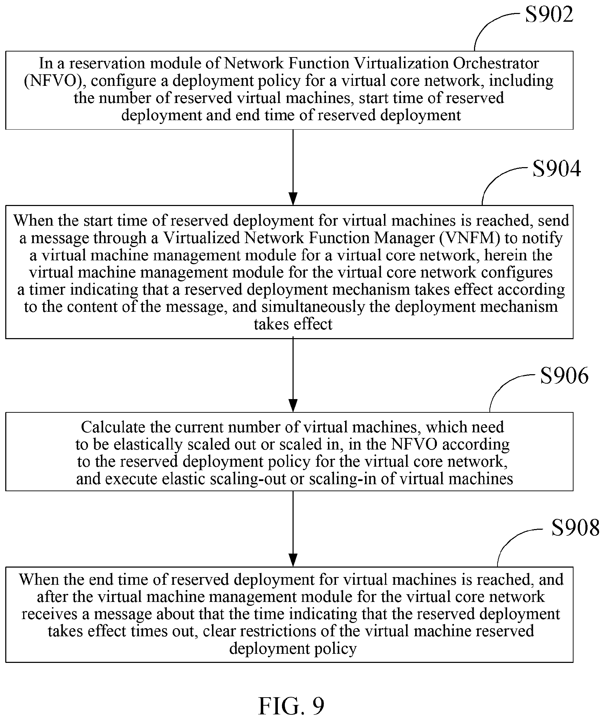

FIG. 9 illustrates another flowchart of a method for reserved deployment of a virtual core network according to an embodiment of the present invention. Referring to FIG. 9, the method includes the following steps S902-S908.

In step S902, a deployment policy for a virtual core network is configured in a Network Function Virtualization Orchestrator (NFVO) reservation module.

In this step, the deployment policy for the virtual core network includes the number of reserved virtual machines, start time of reserved deployment and end time of reserved deployment.

In this step, the number of reserved virtual machines includes a minimum number of deployed virtual machines and a maximum number of deployed virtual machines. The minimum number of deployed virtual machines may be 0 or a positive integer, and the maximum number of deployed virtual machines is an empirical value for guaranteeing normal operation of the device.

In this step, a duration in which reserved deployment takes effect is an interval between the end time of reserved deployment and the start time of reserved deployment. The start time of reserved deployment and the end time of reserved deployment adopt absolute time and may be configured in the form of xxxx (year).xx (month).xx (day) xx (hour):xx (minute):xx (second). For example, the start time of reserved deployment is 2015.12.31 20:00:00 and the end time of reserved deployment is 2016.01.01 02:00:00.

In this step, the start time of reserved deployment may be configured according to experiences. For example, a sum of time needed for the NFVO to complete scaling-out or elastic scaling-out of virtual machines and time needed for user migration and data synchronization caused by scaling-out or elastic scaling-out of virtual machines is considered. The start time of reserved deployment is half an hour or 15 minutes ahead of automatic deployment.

In step S904, when the start time of reserved deployment is reached, a message is sent through a Virtualized Network Function Manager (VNFM) to notify a virtual machine management module for a virtual core network that a reserved deployment mechanism takes effect.

In this step, the content of the message indicating that the reserved deployment takes effect includes the number of reserved virtual machines and the duration in which the reserved deployment takes effect.

In this step, after the virtual machine management module for the virtual core network receives the message, an automatically elastically scaled-out or scaled-in number of virtual machines must be within the range of the number of reserved virtual machines. If it is calculated according to an automatic deployment function of virtual machines that the needed number of virtual machines is smaller than the minimum number of deployed virtual machines by reservation, an elastic scaling-in process of virtual machines cannot be triggered. Similarly, if it is calculated according to the automatic deployment function of virtual machines that the needed number of virtual machines is greater than the maximum number of deployed virtual machines by reservation, an elastic scaling-out process of virtual machines cannot be triggered, either.

In this step, the virtual machine management module for the virtual core network simultaneously configures a timer indicating that the reserved deployment takes effect and the duration of the timer is the duration in which the reserved deployment takes effect.

In step S906, the NFVO may calculate the current number of virtual machines which need to be elastically scaled out or scaled in according to the virtual core network reserved deployment policy since the NFVO has information about the current number of actually running virtual machines. If the current number of virtual machines is smaller than the minimum number of deployed virtual machines by reservation, the number of virtual machines needs to be immediately elastically scaled out to the minimum number of deployed virtual machines by reservation. If the current number of virtual machines is greater than the maximum number of deployed virtual machines by reservation, the number of virtual machines needs to be immediately elastically scaled in, and the number of actually running virtual machines does not exceed the maximum number of deployed virtual machines by reservation.

In step S908, when the end time of reserved deployment is reached, i.e., the timer indicating that the reserved deployment takes effect times out, and after the virtual machine management module for the virtual core network receives a message about that the time indicating that the reserved deployment takes effect times out, restrictions to the number of deployed virtual machines are cleared. The system operates according to an automatic deployment mechanism of virtual machines.

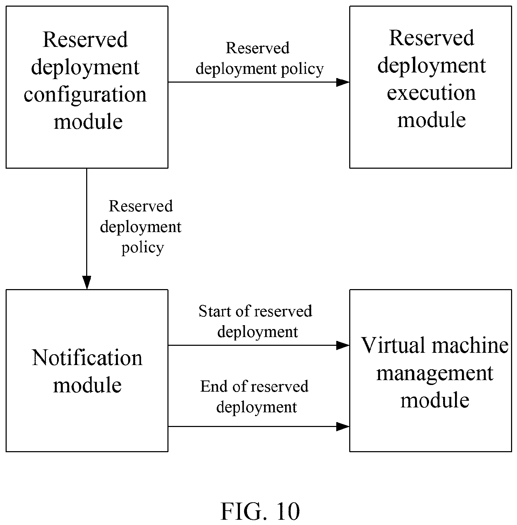

FIG. 10 illustrates a schematic diagram of structural components of a device for deploying a virtual core network according to an embodiment of the present invention. Referring to FIG. 10, the device includes a processor and a program storage device, and further includes a reserved deployment configuration module, a notification module, a virtual machine management module and a reserved deployment execution module.

The reserved deployment configuration module is suitable for configuring a virtual core network reserved deployment policy, including the number of reserved virtual machines, start time of reserved deployment and end time of reserved deployment. The number of reserved virtual machines includes a minimum number of deployed virtual machines and a maximum number of deployed virtual machines. A duration in which reserved deployment takes effect is an interval between the end time of reserved deployment and the start time of reserved deployment.

The notification module is configured to, when the start time of reserved deployment is reached, send a message through a Virtualized Network Function Manager (VNFM) to notify the virtual machine management module for the virtual core network that the reserved deployment mechanism takes effect. A notification message is constructed. The content of the message indicating that the reserved deployment takes effect includes the minimum number of deployed virtual machines and the maximum number of deployed virtual machines.

The notification module is further configured to, when the end time of reserved deployment is reached, send a message through the VNFM to notify the virtual machine management module for the virtual core network that the reserved deployment mechanism loses efficacy. A notification message is constructed. The content of the message indicating that the reserved deployment for virtual machines loses efficacy may be empty or an invalid value.

The virtual machine management module, which is a network element virtualization control module, is configured to process an event that the reserved deployment for virtual machines takes effect. When it is automatically calculated that the number of needed virtual machines is smaller than the minimum number of deployed virtual machines by reservation, virtual machines cannot be elastically scaled in. When it is automatically calculated that the number of needed virtual machines is greater than the maximum number of deployed virtual machines by reservation, virtual machines cannot be elastically scaled out.

The virtual machine management module is further configured to process an event that the reserved deployment for virtual machines loses efficacy. The number of automatically deployed virtual machines is not restricted by the number of deployed virtual machines by reservation any longer.

The reserved deployment execution module is configured to calculate the current number of virtual machines which need to be elastically scaled out or scaled in by a Network Functions Virtualization Orchestrator (NFVO) according to the virtual core network reserved deployment policy. If the current number of virtual machines is smaller than the minimum number of deployed virtual machines by reservation, the number of virtual machines needs to be immediately elastically scaled out to the minimum number of deployed virtual machines by reservation. If the current number of virtual machines is greater than the maximum number of deployed virtual machines by reservation, the number of virtual machines needs to be immediately elastically scaled in. The number of actually running virtual machines does not exceed the maximum number of deployed virtual machines by reservation.

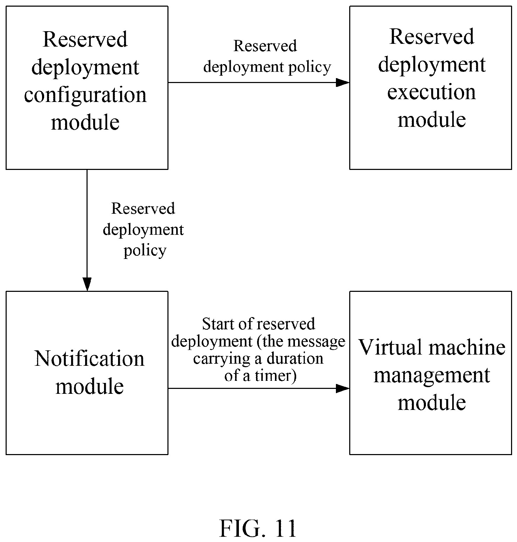

FIG. 11 illustrates another schematic diagram of structural components of a device for deploying a virtual core network according to an embodiment of the present invention. Referring to FIG. 11, the device includes a processor and a program storage device, and further includes a reserved deployment configuration module, a notification module, a reserved deployment execution module and a virtual machine management module.

The reserved deployment configuration module is suitable for configuring a virtual core network reserved deployment policy including the number of reserved virtual machines, start time of reserved deployment and a duration in which reserved deployment takes effect. The number of reserved virtual machines includes a minimum number of deployed virtual machines and a maximum number of deployed virtual machines. The duration in which reserved deployment takes effect is an interval between end time of reserved deployment and the start time of reserved deployment.

The notification module is configured to, when the start time of reserved deployment is reached, send a message through a Virtualized Network Function Manager (VNFM) to notify the virtual machine management module for the virtual core network. The content of the message includes the number of deployed virtual machines by reservation and the duration in which reserved deployment for virtual machines takes effect.

The reserved deployment execution module is configured to calculate the current number of virtual machines which need to be elastically scaled out or scaled in by a Network Functions Virtualization Orchestrator (NFVO) according to the virtual core network reserved deployment policy. If the current number of virtual machines is smaller than the minimum number of deployed virtual machines by reservation, the number of virtual machines needs to be immediately elastically scaled out to the minimum number of deployed virtual machines by reservation. If the current number of virtual machines is greater than the maximum number of deployed virtual machines by reservation, the number of virtual machines needs to be immediately elastically scaled in. The number of actually running virtual machines does not exceed the maximum number of deployed virtual machines by reservation.

The virtual machine management module is configured to receive a message indicating that reserved deployment for virtual machines takes effect. The elastically scaled-out number of virtual machines according to an automatic deployment function is restricted within the range of the maximum number of deployed virtual machines by reservation and the minimum number of deployed virtual machines by reservation. Besides, a timer indicating that reserved deployment takes effect is configured, and the duration of the timer is the duration in which the reserved deployment mechanism of virtual machines takes effect.

The virtual machine management module is further configured to, when the timer indicating that reserved deployment for virtual machines takes effect times out, and after the virtual machine management module for the virtual core network receives a message about that the timer indicating that reserved deployment for virtual machines takes effect times out, clear restrictions to the range of the number of automatically deployed virtual machines.

It needs to be stated that the above-mentioned modules may be implemented by means of software or hardware. In case of implementation by means of hardware, the above-mentioned modules may be implemented by adopting but not limited to the following modes: the above-mentioned modules are all located in the same processor; or the above-mentioned are respectively located in multiple processors.

An embodiment of the present invention further provides a storage medium. In an exemplary embodiment, in this embodiment, the above-mentioned storage medium may be configured to store program codes for executing the following steps S1-S3.
In step S1, when it is determined that start time of reserved deployment for virtual machines in a set deployment policy is reached, a virtual machine management module for a virtual core network is notified that the reserved deployment for virtual machines takes effect. Herein, under a situation that the reserved deployment for virtual machines takes effect, the virtual machine management module for the virtual core network elastically scales out or scales in the number of virtual machines to be within a range of the number of reserved virtual machines.
In step S2, the current elastically scaled-out or scaled-in number of virtual machines is determined according to the deployment policy.
In step S3, virtual machines are deployed according to the determined elastically scaled-out or scaled-in number of virtual machines.

In an exemplary embodiment, the above-mentioned storage medium in this embodiment may include but not limited to various mediums such as USB flash disks, Read-Only Memories (ROMs), Random Access Memories (RAMs), mobile hard disks, magnetic disks or compact disks which can store program codes.

Alternatively, for specific examples in this embodiment, a reference may be made to the examples described in the above-mentioned embodiments and alternative implementation modes, which are not repetitively described here in this embodiment.

In the technical solutions provided by the embodiments of the present invention, the deployment policy for the virtual core network is configured in the reservation module of the NFVO. When the start time of reserved deployment is reached, the message is sent through the VNFM to notify the virtual machine management module for the virtual core network that the reserved deployment mechanism takes effect. Virtual machines are elastically scaled out or scaled in according to the reserved deployment policy for the virtual core network in the NFVO. When the end time of reserved deployment is reached, the message is sent through the VNFM to notify the virtual machine management module for the virtual core network that the reserved deployment mechanism loses efficacy. By adopting the solutions in the embodiments of the present invention and deploying core network virtual machines according to the reserved deployment policy, service traffic impacts which possibly occur are effectively avoided, and sufficient time is reserved for completing scaling-out or elastic scaling-out of virtual machines and thus the user experience is improved. In addition, by configuring the maximum number of deployed virtual machines, more selections are provided to users, and the peak impacts are cut down, and the resources are reasonably allocated and the stable working of the system is guaranteed.

It is apparent to one skilled in the art should understand that all modules or all steps of the present invention may be implemented by using general-purpose computing devices. They may be integrated in a single computing device or distributed on a network consisting of a plurality of computing devices. Optionally, they may be implemented by using program codes executable for computing devices, thus they may be stored in storage devices and executed by computing devices. Under certain circumstances, the illustrated or described steps may be executed according to a sequence different from the sequence here. Or they may be respectively manufactured into integrated circuit modules, or a plurality of modules or steps thereof may be manufactured into a single integrated circuit module to implement. Therefore, the present invention is not limited to any specific combination of hardware and software.

The embodiments described above are just alternative embodiments of the present invention and are not used for limiting the present invention. For one skilled in the art, the present invention may have various modifications and variations. Any modification, equivalent replacement, improvement and the like made within the essence and rule of the present invention shall be still included in the protection scope of the present invention.

### Industrial Applicability

In the above-mentioned technical solutions provided by the embodiments of the present invention, when it is determined that start time of reserved deployment for virtual machines in a set deployment policy is reached, a virtual machine management module for a virtual core network is notified that the reserved deployment for virtual machines takes effect, herein, under a situation that the reserved deployment for virtual machines takes effect, the virtual machine management module for the virtual core network elastically scales out or scales in the number of virtual machines to be within a range of the number of reserved virtual machines; the current elastically scaled-out or scaled-in number of virtual machines is determined according to the deployment policy; and virtual machines are deployed according to the determined elastically scaled-out or scaled-in number of virtual machines. Therefore, through the above-mentioned technical solutions provided by the embodiments of the present invention the problems of slow service processing speed and poor user experience caused by long scaling-out of virtual machines in the related art are solved, and thus the effects of reducing the scaling-out of virtual machines and improving the service processing speed are achieved.

## Claims

1. A virtual machine deployment method, comprising:
determining (S102) that start time of reserved deployment for virtual machines in a set deployment policy is reached, and then notifying (S102) a virtual machine management module for a virtual core network that the reserved deployment for virtual machines takes effect, wherein, under a situation that the reserved deployment for virtual machines takes effect, the virtual machine management module for the virtual core network elastically scales out or scales in a number of virtual machines to be within a range of a number of reserved virtual machines;
determining (S104) a current elastically scaled-out or scaled-in number of virtual machines according to the deployment policy; and
deploying (S106) the virtual machines according to the determined elastically scaled-out or scaled-in number of virtual machines,
wherein the deployment policy further comprises at least one of:
a minimum number of deployed virtual machines, a maximum number of deployed virtual machines, end time of the reserved deployment for virtual machines, and a duration in which the reserved deployment takes effect, wherein the duration in which the reserved deployment takes effect comprises an interval between the start time of the reserved deployment for virtual machines and the end time of the reserved deployment for virtual machines, and the range of the number of reserved virtual machines is determined according to the minimum number of deployed virtual machines and the maximum number of deployed virtual machines,
wherein the step of notifying a virtual machine management module for a virtual core network that the reserved deployment for virtual machines takes effect comprises:
sending a message indicating that the deployment takes effect to the virtual machine management module for the virtual core network through a Virtualized Network Function Manager, VNFM, wherein the message indicating that the deployment takes effect is used for notifying the virtual machine management module for the virtual core network that the reserved deployment for virtual machines takes effect,
**characterized in that**, the message indicating that the deployment takes effect comprises the minimum number of deployed virtual machines, the maximum number of deployed virtual machines and the duration in which the reserved deployment takes effect, wherein when the duration in which the reserved deployment takes effect is reached, the virtual machine management module for the virtual core network clears restrictions to the number of deployed virtual machines.

2. The method according to claim 1, wherein the step of determining a current elastically scaled-out or scaled-in number of virtual machines according to the deployment policy comprises:
determining a current number of the virtual machines;
when determining that the current number of the virtual machines is smaller than the minimum number of deployed virtual machines, determining the current elastically scaled-out number of virtual machines according to a difference value between the current number of the virtual machines and the minimum number of deployed virtual machines; and/or
when determining that the current number of the virtual machines is greater than the maximum number of deployed virtual machines, determining the current elastically scaled-in number of virtual machines according to a difference value between the current number of the virtual machines and the maximum number of deployed virtual machines.

3. The method according to claim 1, wherein after the step of deploying the virtual machines according to the determined elastically scaled-out or scaled-in number of virtual machines, the method further comprises:
when the end time of the reserved deployment for virtual machines is reached, notifying the virtual machine management module for the virtual core network that the reserved deployment for virtual machines loses efficacy, wherein, under a situation that the reserved deployment for virtual machines loses efficacy, the virtual machine management module for the virtual core network clears restrictions to the number of deployed virtual machines.

4. The method according to claim 3, wherein the step of notifying the virtual machine management module for the virtual core network that the reserved deployment for virtual machines loses efficacy comprises:
sending a message indicating that the deployment loses efficacy to the virtual machine management module for the virtual core network through the VNFM, wherein the message indicating that the deployment loses efficacy is used for notifying the virtual machine management module for the virtual core network that the reserved deployment for virtual machines loses efficacy.

5. A virtual machine deployment device, comprising:
a first notification module (22) configured to determine that start time of reserved deployment for virtual machines in a set deployment policy is reached, and then notify a virtual machine management module for a virtual core network that the reserved deployment for virtual machines takes effect, wherein, under a situation that the reserved deployment for virtual machines takes effect, the virtual machine management module for the virtual core network elastically scales out or scales in a number of virtual machines to be within a range of a number of reserved virtual machines;
a determination module (24) configured to determine a current elastically scaled-out or scaled-in number of virtual machines according to the deployment policy; and
a deployment module (26) configured to deploy the virtual machines according to the determined elastically scaled-out or scaled-in number of virtual machines,
wherein the deployment policy further comprises at least one of:
a minimum number of deployed virtual machines, a maximum number of deployed virtual machines, end time of the reserved deployment for virtual machines and a duration in which the reserved deployment takes effect, wherein the duration in which the reserved deployment takes effect comprises an interval between the start time of the reserved deployment for virtual machines and the end time of the reserved deployment for virtual machines, and the range of the number of reserved virtual machines is determined according to the minimum number of deployed virtual machines and the maximum number of deployed virtual machines,
wherein the first notification module (22) comprises:
a first sending unit (42) configured to send a message indicating that the deployment takes effect to the virtual machine management module for the virtual core network through a Virtualized Network Function Manager, VNFM, wherein the message indicating that the deployment takes effect is used for notifying the virtual machine management module for the virtual core network that the reserved deployment for virtual machines takes effect,
**characterized in that**, the message indicating that the deployment takes effect sent by the first sending unit comprises the minimum number of deployed virtual machines, the maximum number of deployed virtual machines and the duration in which the reserved deployment takes effect, wherein when the duration in which the reserved deployment takes effect is reached, the virtual machine management module for the virtual core network clears restrictions to the number of deployed virtual machines.

6. The device according to claim 5, wherein the determination module (24) comprises:
a first determination unit (32) configured to determine a current number of the virtual machines; and
a second determination unit (34) configured to, when determining that the current number of the virtual machines is smaller than the minimum number of deployed virtual machines, determine the current elastically scaled-out number of virtual machines according to a difference value between the current number of the virtual machines and the minimum number of deployed virtual machines; and/or when determining that the current number of the virtual machines is greater than the maximum number of deployed virtual machines, determine the current elastically scaled-in number of virtual machines according to a difference value between the current number of the virtual machines and the maximum number of deployed virtual machines.

7. The device according to claim 5, wherein the device further comprises:
a second notification module (52) configured to, when the end time of the reserved deployment for virtual machines is reached, notify the virtual machine management module for the virtual core network that the reserved deployment for virtual machines loses efficacy, wherein, under a situation that the reserved deployment for virtual machines loses efficacy, the virtual machine management module for the virtual core network clears restrictions to the number of deployed virtual machines.

8. The device according to claim 7, wherein the second notification module (52) comprises:
a second sending unit (62) configured to send a message indicating that the deployment loses efficacy to the virtual machine management module for the virtual core network through the VNFM, wherein the message indicating that the deployment loses efficacy is used for notifying the virtual machine management module for the virtual core network that the reserved deployment for virtual machines loses efficacy.

9. A Network Function Virtualization Orchestrator (72), NFVO, comprising the device (74) according to any one of claims 5-8.

## Patentansprüche

1. Verfahren zur Verwendung einer virtuellen Maschine, das Folgendes umfasst:
Bestimmen (S102), dass die Anfangszeit einer reservierten Verwendung für virtuelle Maschinen in einer vorgegebenen Verwendungsrichtlinie erreicht ist, und dann Benachrichtigen (S102) eines Virtuelle-Maschinen-Management-Moduls für ein virtuelles Kernnetzwerk, dass die reservierte Verwendung für virtuelle Maschinen in Kraft tritt, wobei in einer Situation, dass die reservierte Verwendung für virtuelle Maschinen in Kraft tritt, das Virtuelle-Maschinen-Management-Modul für das virtuelle Kernnetzwerk eine Anzahl virtueller Maschinen elastisch ausskaliert oder einskaliert, so dass sie innerhalb eines Bereichs einer Anzahl reservierter virtueller Maschinen liegt;
Bestimmen (S104) einer momentanen elastisch ausskalierten oder einskalierten Anzahl virtueller Maschinen gemäß der Verwendungsrichtlinie; und
Verwenden (S106) der virtuellen Maschinen gemäß der bestimmten elastisch ausskalierten oder einskalierten Anzahl virtueller Maschinen,
wobei die Verwendungsrichtlinie des Weiteren mindestens eines von Folgendem umfasst:
eine Mindestanzahl verwendeter virtueller Maschinen, eine Maximalanzahl verwendeter virtueller Maschinen, eine Endzeit der reservierten Verwendung für virtuelle Maschinen, und eine Dauer, während der die reservierte Verwendung in Kraft tritt, wobei die Dauer, während der die reservierte Verwendung in Kraft tritt, ein Intervall zwischen der Anfangszeit der reservierten Verwendung für virtuelle Maschinen und der Endzeit der reservierten Verwendung für virtuelle Maschinen umfasst, und der Bereich der Anzahl der reservierten virtuellen Maschinen gemäß der Mindestanzahl verwendeter virtueller Maschinen und der Maximalanzahl verwendeter virtueller Maschinen bestimmt wird,
wobei der Schritt des Benachrichtigens eines Virtuelle-Maschinen-Management-Moduls für ein virtuelles Kernnetzwerk, dass die reservierte Verwendung für virtuelle Maschinen in Kraft tritt, Folgendes umfasst:
Senden einer Nachricht, die anzeigt, dass die Verwendung in Kraft tritt, an das Virtuelle-Maschinen-Management-Modul für das virtuelle Kernnetzwerk durch einen Virtualized Network Function Manager (VNFM), wobei die Nachricht, die anzeigt, dass die Verwendung in Kraft tritt, dafür verwendet wird, das Virtuelle-Maschinen-Management-Modul für das virtuelle Kernnetzwerk zu benachrichtigen, dass die reservierte Verwendung für virtuelle Maschinen in Kraft tritt,
**dadurch gekennzeichnet, dass** die Nachricht, die anzeigt, dass die Verwendung in Kraft tritt, die Mindestanzahl verwendeter virtueller Maschinen, die Maximalanzahl verwendeter virtueller Maschinen und die Dauer, während der die reservierte Verwendung in Kraft tritt, umfasst, wobei, wenn die Dauer, während der die reservierte Verwendung in Kraft tritt, erreicht ist, das Virtuelle-Maschinen-Management-Modul für das virtuelle Kernnetzwerk Einschränkungen bezüglich der Anzahl verwendeter virtueller Maschinen aufhebt.

2. Verfahren nach Anspruch 1, wobei der Schritt des Bestimmens einer momentanen elastisch ausskalierten oder einskalierten Anzahl virtueller Maschinen gemäß der Verwendungsrichtlinie Folgendes umfasst:
Bestimmen einer momentanen Anzahl virtueller Maschinen;
wenn bestimmt wird, dass die momentane Anzahl virtueller Maschinen kleiner ist als die Mindestanzahl verwendeter virtueller Maschinen, Bestimmen der momentanen elastisch ausskalierten Anzahl virtueller Maschinen gemäß einem Differenzwert zwischen der momentanen Anzahl virtueller Maschinen und der Mindestanzahl verwendeter virtueller Maschinen; und/oder
wenn bestimmt wird, dass die momentane Anzahl virtueller Maschinen größer ist als die Maximalanzahl verwendeter virtueller Maschinen, Bestimmen der momentanen elastisch einskalierten Anzahl virtueller Maschinen gemäß einem Differenzwert zwischen der momentanen Anzahl virtueller Maschinen und der Maximalanzahl verwendeter virtueller Maschinen.

3. Verfahren nach Anspruch 1, wobei das Verfahren nach dem Schritt des Verwendens der virtuellen Maschinen gemäß der bestimmten elastisch ausskalierten oder einskalierten Anzahl virtueller Maschinen, des Weiteren Folgendes umfasst:
wenn die Endzeit der reservierten Verwendung für virtuelle Maschinen erreicht ist, Benachrichtigen des Virtuelle-Maschinen-Management-Moduls für das virtuelle Kernnetzwerk, dass die reservierte Verwendung für virtuelle Maschinen ihre Wirksamkeit verliert, wobei in einer Situation, dass die reservierte Verwendung für virtuelle Maschinen ihre Wirksamkeit verliert, das Virtuelle-Maschinen-Management-Modul für das virtuelle Kernnetzwerk Einschränkungen bezüglich der Anzahl verwendeter virtueller Maschinen aufhebt.

4. Verfahren nach Anspruch 3, wobei der Schritt des Benachrichtigens des Virtuelle-Maschinen-Management-Moduls für das virtuelle Kernnetzwerk, dass die reservierte Verwendung für virtuelle Maschinen ihre Wirksamkeit verliert, Folgendes umfasst:
Senden einer Nachricht, die anzeigt, dass die Verwendung ihre Wirksamkeit verliert, an das Virtuelle-Maschinen-Management-Modul für das virtuelle Kernnetzwerk durch den VNFM, wobei die Nachricht, die anzeigt, dass die Verwendung ihre Wirksamkeit verliert, dafür verwendet wird, das Virtuelle-Maschinen-Management-Modul für das virtuelle Kernnetzwerk zu benachrichtigen, dass die reservierte Verwendung für virtuelle Maschinen ihre Wirksamkeit verliert.

5. Virtuelle-Maschinen-Verwendungsvorrichtung, die Folgendes umfasst:
ein erstes Benachrichtigungsmodul (22), das dafür konfiguriert ist zu bestimmen, dass die Anfangszeit einer reservierten Verwendung für virtuelle Maschinen in einer vorgegebenen Verwendungsrichtlinie erreicht ist, und dann ein Virtuelle-Maschinen-Management-Modul für ein virtuelles Kernnetzwerk zu benachrichtigen, dass die reservierte Verwendung für virtuelle Maschinen in Kraft tritt, wobei in einer Situation, dass die reservierte Verwendung für virtuelle Maschinen in Kraft tritt, das Virtuelle-Maschinen-Management-Modul für das virtuelle Kernnetzwerk eine Anzahl virtueller Maschinen elastisch ausskaliert oder einskaliert, so dass sie innerhalb eines Bereichs einer Anzahl reservierter virtueller Maschinen liegt;
ein Bestimmungsmodul (24), das dafür konfiguriert ist, eine momentane elastisch ausskalierte oder einskalierte Anzahl virtueller Maschinen gemäß der Verwendungsrichtlinie zu bestimmen; und
ein Verwendungsmodul (26), das dafür konfiguriert ist, die virtuellen Maschinen gemäß der bestimmten elastisch ausskalierten oder einskalierten Anzahl virtueller Maschinen zu verwenden,
wobei die Verwendungsrichtlinie des Weiteren mindestens eines von Folgendem umfasst:
eine Mindestanzahl verwendeter virtueller Maschinen, eine Maximalanzahl verwendeter virtueller Maschinen, eine Endzeit der reservierten Verwendung für virtuelle Maschinen, und eine Dauer, während der die reservierte Verwendung in Kraft tritt, wobei die Dauer, während der die reservierte Verwendung in Kraft tritt, ein Intervall zwischen der Anfangszeit der reservierten Verwendung für virtuelle Maschinen und der Endzeit der reservierten Verwendung für virtuelle Maschinen umfasst, und der Bereich der Anzahl der reservierten virtuellen Maschinen gemäß der Mindestanzahl verwendeter virtueller Maschinen und der Maximalanzahl verwendeter virtueller Maschinen bestimmt wird,
wobei das erste Benachrichtigungsmodul (22) Folgendes umfasst:
eine erste Sendeeinheit (42), die dafür konfiguriert ist, eine Nachricht, die anzeigt, dass die Verwendung in Kraft tritt, an das Virtuelle-Maschinen-Management-Modul für das virtuelle Kernnetzwerk durch einen Virtualized Network Function Manager (VNFM) zu senden, wobei die Nachricht, die anzeigt, dass die Verwendung in Kraft tritt, dafür verwendet wird, das Virtuelle-Maschinen-Management-Modul für das virtuelle Kernnetzwerk zu benachrichtigen, dass die reservierte Verwendung für virtuelle Maschinen in Kraft tritt,
**dadurch gekennzeichnet, dass** die durch die erste Sendeeinheit gesendete Nachricht, die anzeigt, dass die Verwendung in Kraft tritt, die Mindestanzahl verwendeter virtueller Maschinen, die Maximalanzahl verwendeter virtueller Maschinen und die Dauer, während der die reservierte Verwendung in Kraft tritt, umfasst, wobei, wenn die Dauer, während der die reservierte Verwendung in Kraft tritt, erreicht ist, das Virtuelle-Maschinen-Management-Modul für das virtuelle Kernnetzwerk Einschränkungen bezüglich der Anzahl verwendeter virtueller Maschinen aufhebt.

6. Vorrichtung nach Anspruch 5, wobei das Bestimmungsmodul (24) Folgendes umfasst:
eine erste Bestimmungseinheit (32), die dafür konfiguriert ist, eine momentane Anzahl virtueller Maschinen zu bestimmen; und
eine zweite Bestimmungseinheit (34), die dafür konfiguriert ist, wenn bestimmt wird, dass die momentane Anzahl virtueller Maschinen kleiner ist als die Mindestanzahl verwendeter virtueller Maschinen, die momentane elastisch ausskalierte Anzahl virtueller Maschinen gemäß einem Differenzwert zwischen der momentanen Anzahl virtueller Maschinen und der Mindestanzahl verwendeter virtueller Maschinen zu bestimmen; und/oder wenn bestimmt wird, dass die momentane Anzahl virtueller Maschinen größer ist als die Maximalanzahl verwendeter virtueller Maschinen, die momentane elastisch einskalierte Anzahl virtueller Maschinen gemäß einem Differenzwert zwischen der momentanen Anzahl virtueller Maschinen und der Maximalanzahl verwendeter virtueller Maschinen zu bestimmen.

7. Vorrichtung nach Anspruch 5, wobei die Vorrichtung des Weiteren Folgendes umfasst:
ein zweites Benachrichtigungsmodul (52), das dafür konfiguriert ist, wenn die Endzeit der reservierten Verwendung für virtuelle Maschinen erreicht ist, das Virtuelle-Maschinen-Management-Modul für das virtuelle Kernnetzwerk zu benachrichtigen, dass die reservierte Verwendung für virtuelle Maschinen ihre Wirksamkeit verliert, wobei in einer Situation, dass die reservierte Verwendung für virtuelle Maschinen ihre Wirksamkeit verliert, das Virtuelle-Maschinen-Management-Modul für das virtuelle Kernnetzwerk Einschränkungen bezüglich der Anzahl verwendeter virtueller Maschinen aufhebt.

8. Vorrichtung nach Anspruch 7, wobei das zweite Benachrichtigungsmodul (52) Folgendes umfasst:
eine zweite Sendeeinheit (62), die dafür konfiguriert ist, eine Nachricht, die anzeigt, dass die Verwendung ihre Wirksamkeit verliert, an das Virtuelle-Maschinen-Management-Modul für das virtuelle Kernnetzwerk durch den VNFM zu senden, wobei die Nachricht, die anzeigt, dass die Verwendung ihre Wirksamkeit verliert, dafür verwendet wird, das Virtuelle-Maschinen-Management-Modul für das virtuelle Kernnetzwerk zu benachrichtigen, dass die reservierte Verwendung für virtuelle Maschinen ihre Wirksamkeit verliert.

9. Network Function Virtualization Orchestrator (NFVO) (72), der die Vorrichtung (74) nach einem der Ansprüche 5-8 umfasst.

## Revendications

1. Procédé de déploiement de machines virtuelles, comprenant :
la détermination (S102) qu'un temps de début d'un déploiement réservé de machines virtuelles dans une politique de déploiement réglée est atteint, puis la notification (S102), à un module de gestion de machines virtuelles pour un réseau central virtuel, que le déploiement réservé de machines virtuelles prend effet, dans lequel, dans une situation dans laquelle le déploiement réservé de machines virtuelles prend effet, le module de gestion de machines virtuelles pour le réseau central virtuel augmente ou diminue élastiquement un nombre de machines virtuelles pour qu'il soit à l'intérieur d'une plage d'un nombre de machines virtuelles réservées ;
la détermination (S104) d'un nombre actuel augmenté ou diminué élastiquement de machines virtuelles en fonction de la politique de déploiement ; et
le déploiement (S106) des machines virtuelles en fonction du nombre augmenté ou diminué élastiquement déterminé de machines virtuelles,
dans lequel la politique de déploiement comprend en outre au moins l'un de :
un nombre minimal de machines virtuelles déployées, un nombre maximal de machines virtuelles déployées, un temps de fin du déploiement réservé de machines virtuelles, et une durée pendant laquelle le déploiement réservé prend effet, dans lequel la durée pendant laquelle le déploiement réservé prend effet comprend un intervalle entre le temps de début du déploiement réservé de machines virtuelles et le temps de fin du déploiement réservé de machines virtuelles, et la plage du nombre de machines virtuelles réservées esdéterminée en fonction du nombre minimal de machines virtuelles déployées et du nombre maximal de machines virtuelles déployées,
dans lequel l'étape de la notification, à un module de gestion de machines virtuelles d'un réseau central virtuel, que le déploiement réservé de machines virtuelles prend effet comprend :
l'envoi d'un message indiquant que le déploiement prend effet au module de gestion de machines virtuelles pour le réseau central virtuel par l'intermédiaire d'un gestionnaire de fonction de réseau virtualisée, VNFM, dans lequel le message indiquant que le déploiement prend effet est utilisé pour la notification, au module de gestion de machines virtuelles pour le réseau central virtuel, que le déploiement réservé de machines virtuelles prend effet,
**caractérisé en ce que** le message indiquant que le déploiement prend effet comprend le nombre minimal de machines virtuelles déployées, le nombre maximal de machines virtuelles déployées et la durée pendant laquelle le déploiement réservé prend effet, dans lequel, lorsque la durée pendant laquelle le déploiement réservé prend effet est atteinte, le module de gestion de machines virtuelles pour le réseau central virtuel élimine des restrictions du nombre de machines virtuelles déployées.

2. Procédé selon la revendication 1, dans lequel l'étape de la détermination d'un nombre actuel augmenté ou diminué élastiquement de machine virtuelle en fonction de la politique de déploiement comprend :
la détermination d'un nombre actuel des machines virtuelles ;
lorsqu'il est déterminé que le nombre actuel des machines virtuelles est inférieur au nombre minimal de machines virtuelles déployées, la détermination du nombre actuel augmenté élastiquement de machines virtuelles en fonction d'une valeur de différence entre le nombre actuel des machines virtuelles et le nombre minimal de machines virtuelles déployées ; et/ou
lorsqu'il est déterminé que le nombre actuel des machines virtuelles est supérieur au nombre maximal de machines virtuelles déployées, la détermination du nombre actuel diminué élastiquement de machines virtuelles en fonction d'une valeur de différence entre le nombre actuel des machines virtuelles et le nombre maximal de machines virtuelles déployées.

3. Procédé selon la revendication 1, dans lequel, après l'étape du déploiement des machines virtuelles en fonction du nombre augmenté ou diminué élastiquement déterminé de machines virtuelles, le procédé comprend en outre :
lorsque le temps de fin du déploiement réservé de machines virtuelles est atteint, la notification, au module de gestion de machines virtuelles pour le réseau central virtuel, que le déploiement réservé de machines virtuelles perd de l'efficacité, dans lequel, dans une situation dans laquelle le déploiement réservé de machines virtuelles perd de l'efficacité, le module de gestion de machines virtuelles pour le réseau central virtuel élimine des restrictions du nombre de machines virtuelles déployées.

4. Procédé selon la revendication 3, dans lequel l'étape de la notification, au module de gestion de machines virtuelles pour le réseau central virtuel, que le déploiement réservé de machines virtuelles perd de l'efficacité comprend :
l'envoi d'un message indiquant que le déploiement perd de l'efficacité, au module de gestion de machines virtuelles pour le réseau central virtuel par l'intermédiaire du VNFM, dans lequel le message indiquant que le déploiement perd de l'efficacité est utilisé pour la notification, au module de gestion de machines virtuelles du réseau central virtuel, que le déploiement réservé de machines virtuelles perd de l'efficacité.

5. Dispositif de déploiement de machines virtuelles, comprenant :
un premier module de notification (22) configuré pour la détermination qu'un temps de début d'un déploiement réservé de machines virtuelles dans une politique de déploiement réglée est atteint, puis la notification, à un module de gestion de machines virtuelles pour un réseau central virtuel, que le déploiement réservé de machines virtuelles prend effet, dans lequel, dans une situation dans laquelle le déploiement réservé de machines virtuelles prend effet, le module de gestion de machines virtuelles pour le réseau central virtuel augmente ou diminue élastiquement un nombre de machines virtuelles pour qu'il soit à l'intérieur d'une plage d'un nombre de machines virtuelles réservées ;
un module de détermination (24) configuré pour la détermination d'un nombre actuel augmenté ou diminué élastiquement de machines virtuelles en fonction de la politique de déploiement ; et
un module de déploiement (26) configuré pour le déploiement des machines virtuelles en fonction du nombre augmenté ou diminué élastiquement déterminé de machines virtuelles,
dans lequel la politique de déploiement comprend en outre au moins l'un de :
un nombre minimal de machines virtuelles déployées, un nombre maximal de machines virtuelles déployées, un temps de fin du déploiement réservé de machines virtuelles, et une durée pendant laquelle le déploiement réservé prend effet, dans lequel la durée pendant laquelle le déploiement réservé prend effet comprend un intervalle entre le temps de début du déploiement réservé de machines virtuelles et le temps de fin du déploiement réservé de machines virtuelles, et la plage du nombre de machines virtuelles réservées est déterminée en fonction du nombre minimal de machines virtuelles déployées et du nombre maximal de machines virtuelles déployées,
dans lequel le premier module de notification (22) comprend :
une première unité d'envoi (42) configurée pour l'envoi d'un message indiquant que le déploiement prend effet au module de gestion de machines virtuelles pour le réseau central virtuel par l'intermédiaire d'un gestionnaire de fonction de réseau virtualisée, VNFM, dans lequel le message indiquant que le déploiement prend effet est utilisé pour la notification, au module de gestion de machines virtuelles pour le réseau central virtuel, que le déploiement réservé de machines virtuelles prend effet,
**caractérisé en ce que** le message indiquant que le déploiement prend effet envoyé par la première unité d'envoi comprend le nombre minimal de machines virtuelles déployées, le nombre maximal de machines virtuelles déployées et la durée pendant laquelle le déploiement réservé prend effet, dans lequel, lorsque la durée pendant laquelle le déploiement réservé prend effet est atteinte, le module de gestion de machines virtuelles pour le réseau central virtuel élimine des restrictions du nombre de machines virtuelles déployées.

6. Dispositif selon la revendication 5, dans lequel le module de détermination (24) comprend :
une première unité de détermination (32) configurée pour la détermination d'un nombre actuel des machines virtuelles ; et
une deuxième unité de détermination (34) configurée pour, lorsqu'il est déterminé que le nombre actuel des machines virtuelles est inférieur au nombre minimal de machines virtuelles déployées, la détermination du nombre actuel augmenté élastiquement de machines virtuelles en fonction d'une valeur de différence entre le nombre actuel des machines virtuelles et le nombre minimal de machines virtuelles déployées ; et/ou lorsqu'il est déterminé que le nombre actuel des machines virtuelles est supérieur au nombre maximal de machines virtuelles déployées, la détermination du nombre actuel diminué élastiquement de machines virtuelles en fonction d'une valeur de différence entre le nombre actuel des machines virtuelles et le nombre maximal de machines virtuelles déployées.

7. Dispositif selon la revendication 5, dans lequel le dispositif comprend en outre :
un deuxième module de notification (52) configuré pour, lorsque le temps de fin du déploiement réservé de machines virtuelles est atteint, la notification, au module de gestion de machines virtuelles pour le réseau central virtuel, que le déploiement réservé de machines virtuelles perd de l'efficacité, dans lequel, dans une situation dans laquelle le déploiement réservé de machines virtuelles perd de l'efficacité, le module de gestion de machines virtuelles pour le réseau central virtuel élimine des restrictions du nombre de machines virtuelles déployées.

8. Dispositif selon la revendication 7, dans lequel le deuxième module de notification (52) comprend :
une deuxième unité d'envoi (62) configurée pour l'envoi d'un message indiquant que le déploiement perd de l'efficacité, au module de gestion de machines virtuelles pour le réseau central virtuel par l'intermédiaire du VNFM, dans lequel le message indiquant que le déploiement perd de l'efficacité est utilisé pour la notification, au module de gestion de machines virtuelles du réseau central virtuel, que le déploiement réservé de machines virtuelles perd de l'efficacité.

9. Orchestrateur de virtualisation de fonction de réseau, NFVO, (72) comprenant le dispositif (74) selon l'une quelconque des revendications 5 à 8.
